# EUROPÄISCHE PATENTSCHRIFT

(11) **EP 2 864 211 B1**
(45) Veröffentlichungstag und Bekanntmachung des Hinweises auf die Patenterteilung: **10.08.2016**
(21) Anmeldenummer: 13730864.9
(22) Anmeldetag: 17.06.2013
(51) Int. Cl.: B65D 5/38, B65D 5/50, B65D 61/00

(54) **VERPACKUNG FÜR EIN WISCHERBLATT**
PACKAGING FOR A WIPER BLADE
EMBALLAGE POUR UN BALAI D'ESSUIE-GLACE

(30) Priorität: 26.06.2012 DE 102012210885
(43) Veröffentlichungstag der Anmeldung: 29.04.2015
(73) Patentinhaber: Robert Bosch GmbH, 70442 Stuttgart (DE)
(72) Erfinder: CASTELEYN, Pieter, B-3012 Wilsele (BE); RENNER, Ruediger, 76327 Pfinztal-Berghausen (DE); HERINCKX, Dirk, B-3350 Dries-Linter (BE)
(86) Internationale Anmeldenummer: PCT/EP2013/062535
(87) Internationale Veröffentlichungsnummer: WO 2014/001130

(56) Entgegenhaltungen:
- DE-A1- 19 634 683
- DE-U1- 29 716 702
- FR-A1- 2 287 393
- FR-A1- 2 684 958
- FR-A1- 2 902 413
- US-A1- 2008 073 246
- US-A1- 2012 043 237

## Beschreibung

Die Erfindung betrifft eine Verpackung für ein Wischerblatt. Insbesondere betrifft die Erfindung eine zweiteilige Verpackung für ein Wischerblatt, die aus einem faltbaren Material herstellbar ist.

### Stand der Technik

Ein Wischerblatt für ein Wischersystem eines Kraftfahrzeugs stellt ein Verschleißteil dar, das regelmäßig gewechselt werden sollte. Aufgrund der unterschiedlichen Abmessungen gängiger Kraftfahrzeuge und unterschiedlicher daran installierter Wischersysteme existiert eine Vielzahl unterschiedlicher Wischerblätter, aus der beim Wechsel für jedes Kraftfahrzeug ein passendes ausgewählt werden muss. Um an einer Verkaufsstelle für Wischerblätter, beispielsweise einer Tankstelle, einer Fachabteilung in einem Baumarkt oder an einem KFZ-Servicepunkt, Wischerblätter in gleichbleibender Qualität ausreichend vorhalten zu können, ist es erforderlich, das Wischerblatt so zu verpacken, dass es während des Transports und der Lagerung gut geschützt ist. Außerdem sollte eine Vielzahl verpackter Wischerblätter systematisch stapelbar sein, um die Lagerung und den Transport zu erleichtern. Schließlich ist es von Vorteil, ein einzeln verpacktes Wischerblatt und paarweise verpackte Wischerblätter in ähnliche bzw. zueinander kompatible Verpackungen zu verpacken. Die Verpackung sollte das Wischerblatt auch bei längerer Aufbewahrungsdauer sicher schützen. Insbesondere ein gelenkloses Wischerblatt sollte von der Verpackung derart abgestützt sein, dass ein durch Lagern bedingter Schaden möglichst ausgeschlossen ist.

Der Erfindung liegt die Aufgabe zugrunde, eine derartige Verpackung für ein Wischerblatt anzugeben. Die Erfindung löst diese Aufgabe mittels einer Verpackung mit den Merkmalen des unabhängigen Anspruchs. Unteransprüche geben bevorzugte Ausführungsformen wieder.

Eine gattungsgemäße Verpackung ist beispielsweise aus der FR 2684958 A1 bekannt.

### Offenbarung der Erfindung

Eine erfindungsgemäße Verpackung für ein Wischerblatt umfasst eine quaderförmige Faltschachtel und eine Zwischenverpackung zur Aufnahme des Wischerblatts und um in der Faltschachtel aufgenommen zu werden. Dabei ist die Zwischenverpackung aus einem ebenen Material durch Falten herstellbar und weist zwei parallele Längsseiten zur Anlage an Innenseiten der Faltschachtel auf. Ferner umfasst die Zwischenverpackung laterale Stützeinrichtungen, um einem Kippen des Wischerblatts in der Zwischenverpackung entgegenzuwirken.

Mittels der Zwischenverpackung ist es möglich, Wischerblätter, die sich bezüglich ihrer Länge, ihrer Höhe oder ihrer Breite im Rahmen einer Sortimentsvielfalt unterscheiden, auf ähnliche Weise zu verpacken, so dass einerseits das verpackte Wischerblatt optimal geschützt ist, und andererseits mehrere verpackte Wischerblätter auf ähnliche Weise anzuordnen bzw. zu handhaben sind. Eine Lagerung, ein Transport und eine Darbietung zur Auswahl bzw. zum Verkauf können dadurch erleichtert sein.

Erfindungsgemäß umfasst die Zwischenverpackung einen V-förmigen Querschnitt. Die beiden Schenkel der V-Form können sich auf diese Weise an die Seiten des Wischerblatts anschmiegen und auf einfache und wirkungsvolle Weise das Wischerblatt lateral abstützen. Ein Einsetzen des Wischerblatts an der oben offenen Seite des V-förmigen Querschnitts kann erleichtert sein.

In einer weiteren Ausführungsform ist die Zwischenverpackung an einer Längsseite offen und umfasst eine den Querschnitt umschließende Banderole. Die Banderole kann bevorzugterweise wie die Zwischenverpackung aus einem ebenen, faltbaren Material, insbesondere Papier, Karton oder einem entsprechenden Derivat herstellbar sein. Eine automatisierte Fixierung des Wischerblatts in der Zwischenverpackung kann dadurch erleichtert sein. Außerdem kann das Wischerblatt auf eine besonders wertige Weise präsentiert werden, während die Zwischenverpackung mit dem Wischerblatt aus der Faltschachtel entnommen wird.

In einer Ausführungsform umfasst die Zwischenverpackung ein erstes Element mit U-förmigem Querschnitt und ein zweites Element, dessen Querschnitt abwechselnd vertikale und horizontale Abschnitte umfasst und das bezüglich eines mittleren Abschnitts, der zwischen den Schenkeln des ersten Elements an diesem anliegt, symmetrisch ist. Diese Ausführungsform kann insbesondere mit der vorgenannten Ausführungsform kombinierbar sein. Alternativ dazu kann das erste Element einen zusätzlichen Abschnitt aufweisen, mittels dem das erste Element an der Längsseite verschlossen werden kann. Ein Schutz des in der Zwischenverpackung aufgenommenen Wischerblatts kann dadurch weiter gesteigert sein.

In noch einer weiteren Ausführungsform umfasst der Querschnitt der Zwischenverpackung einen M-förmigen Bodenabschnitt. Durch den M-förmigen Bodenabschnitt kann die laterale Stützwirkung auf einfache und zuverlässige Weise realisiert sein. Zusätzliche Abschnitte der Zwischenverpackung können stufenförmig um das Wischerblatt herum gelegt werden, um dem Querschnitt eine rechteckige Außenseite zu verleihen.

In noch einer Ausführungsform umfasst die Zwischenverpackung prismenförmige Auflagen für die Enden des Wischerblatts, wobei die Auflagen jeweils eine V-förmige Kerbe zur Anlage des Wischerblatts aufweisen. Die prismenförmigen Auflagen können durch Falten des Materials der Zwischenverpackung in Querrichtung leicht herstellbar sein. Die Kerben können auf einfache Weise an unterschiedliche Wischerblätter anpassbar sein.

Die Zwischenverpackung kann in Längsrichtung mit zwei Falzen U-förmig gestaltet sein und im Bereich der Falze können jeweils winklige Stützelemente in Richtung Innenseite gefaltet sein. Die Stützelemente können leicht an unterschiedliche Wischerblätter anpassbar sein. Außerdem kann die Zwischenverpackung auf diese Weise aus einem rechteckigen Ausgangsmaterial ohne Verschnitt faltbar sein.

In einer bevorzugten Ausführungsform ist die Zwischenverpackung dazu eingerichtet, das Wischerblatt an einer Längsseite aufzunehmen. Insbesondere kann das Wischerblatt von oben in die Zwischenverpackung eingesetzt werden. Eine automatisierte Herstellung und Verpackung des Wischerblatts kann dadurch erleichtert sein.

In noch einer bevorzugten Ausführungsform ist die Faltschachtel dazu eingerichtet, zwei Zwischenverpackungen aufzunehmen. Dadurch können paarweise für ein Kraftfahrzeug erforderliche Wischerblätter leichter logistisch verwaltbar sein. Eine weitere Faltschachtel zur Aufnahme nur einer Zwischenverpackung kann so geformt sein, dass sie so hoch ist wie die erste Faltschachtel breit ist.

### Kurze Beschreibung der Figuren

Die Erfindung wird nun mit Bezug auf die beigefügten Figuren genauer beschrieben, in denen:
- Figur 1: eine Verpackung für ein Wischerblatt und ein Verpackungsverfahren in einer ersten Ausführungsform;
- Figur 2: eine Verpackung für ein Wischerblatt und ein Verpackungsverfahren in einer zweiten Ausführungsform;
- Figur 3: eine Verpackung für ein Wischerblatt und ein Verpackungsverfahren in einer dritten Ausführungsform;
- Figur 4: eine Verpackung für ein Wischerblatt und ein Verpackungsverfahren in einer vierten Ausführungsform;
- Figur 5: eine Verpackung für ein Wischerblatt und ein Verpackungsverfahren in einer fünften Ausführungsform; und
- Figur 6: eine Verpackung für ein Wischerblatt und ein Verpackungsverfahren in einer sechsten Ausführungsform darstellt.

### Genaue Beschreibung von Ausführungsbeispielen

Im Folgenden werden sechs unterschiedliche Ausführungsformen von Verpackungen für ein Wischerblatt bzw. ein Paar von Wischerblättern genauer beschrieben. Zu jeder Verpackung korrespondiert ein Verfahren, um die Zwischenverpackung aus einem ebenen, faltbaren Material herzustellen, das Wischerblatt in die Zwischenverpackung einzulegen und die Zwischenverpackung samt Wischerblatt in einer Faltschachtel zu verpacken. Die Ausführungsformen sind auf den folgenden Figuren jeweils links und die Verfahren schematisch rechts dargestellt. Anordnungen von Ansichten der Ausführungsformen sind in allen Figuren weitgehend gleich.

Merkmale von Zwischenverpackungen unterschiedlicher Ausführungsformen sind allgemein untereinander kombinierbar. Die zugehörigen Verfahrensschritte müssen dann unter Umständen entsprechend angepasst werden, wie einem Fachmann ohne Weiteres aus den folgenden Erklärungen offenbart wird.

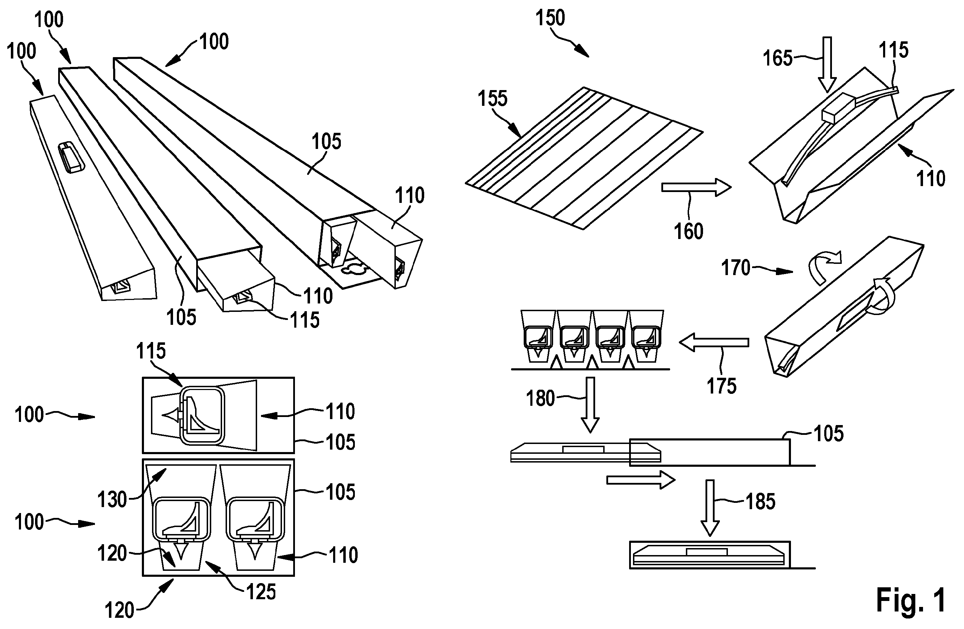

Figur 1 zeigt links eine Verpackung 100 für ein Wischerblatt in einer ersten Ausführungsform. Die Verpackung 100 umfasst eine quaderförmige Faltschachtel 105 und eine Zwischenverpackung 110. Die Faltschachtel 105 ist nach einem beliebigen Verfahren herstellbar und kann mit einem Aufdruck oder einer sonstigen Kennzeichnung ihres Inhalts versehen sein. Die Zwischenverpackung 110 ist dazu eingerichtet, ein Wischerblatt 115 aufzunehmen und zusammen mit dem Wischerblatt 115 in der Faltschachtel 105 aufgenommen zu werden. In einem oberen Bereich von Figur 1 sind von links nach rechts die Zwischenverpackung 110 mit dem Wischerblatt 115, eine erste Faltschachtel 105 mit einer Zwischenverpackung 110 und einem Wischerblatt 115 sowie eine zweite Faltschachtel 105 mit zwei Zwischenverpackungen 110 und zwei Wischerblättern 115 dargestellt. In einem unteren Bereich der Figur sind Querschnitte der ersten Faltschachtel 105 und der zweiten Faltschachtel 105 mit den Zwischenverpackungen 110 und Wischerblättern 115 dargestellt. Der Querschnitt des Wischerblatts 115 ist dabei nur symbolisch wiedergegeben.

Die Zwischenverpackung 110 weist einen Querschnitt auf, der V-förmig oder, in der dargestellten Ausführungsform mit gekappter Spitze, trapezförmig ist. Zu beiden Seiten eines Bodenabschnitts der Zwischenverpackung 110 ist je ein Seitenabschnitt 125 angeordnet. Einer oder vorzugsweise beide Seitenabschnitte 125 sind in ihren Verlängerungen als Deckelabschnitte 130 parallel zum Bodenabschnitt 120 gefaltet. Dabei können die aneinander anliegenden Deckelabschnitte 130 flächig miteinander verklebt sein.

Figur 1 zeigt rechts ein Verfahren 150 zur Verpackung des Wischerblatts 115 in der Verpackung 100. Als Ausgangsmaterial dient ein ebenes, faltbares Material, das Plano 155 genannt wird. Das Plano kann insbesondere aus Karton, Pappe, Papier, Zellstoff oder Kunststoff bestehen. Das Plano 155 ist bevorzugterweise an vorbestimmten Stellen gefalzt, um dort anschließend leichter knickbar zu sein.

In einem ersten Schritt 160 wird das Plano 155 in die V-Form bzw. in die Form eines abgeflachten Prismas gebracht. Anschließend wird in einem Schritt 165 das Wischerblatt 115 in die oben noch geöffnete Zwischenverpackung 110 eingelegt.

In einem folgenden Schritt 170 werden die Deckelabschnitte 130 der Zwischenverpackung 110 nach innen gefaltet, so dass sie aneinander anliegen. Bevorzugterweise werden die beiden Deckelabschnitte 130 dabei mittels eines Klebstoffs miteinander verklebt.

In einem optionalen Schritt 175 werden mehrere Zwischenverpackungen 110 mit eingelegten Wischerblättern 115 gesammelt. Insbesondere kann das Sammeln ein Bereitstellen der Zwischenverpackungen 110 auf einem Tablett oder in einer Warteschlange einer Fertigungslinie umfassen.

Anschließend wird die Zwischenverpackung 110 mit dem Wischerblatt 115 in eine der Faltschachteln 180 eingeführt. Dabei erfolgt das Einführen bevorzugterweise von einer Stirnseite. Ist die Faltschachtel 105 dazu eingerichtet, mehrere Zwischenverpackungen 110 aufzunehmen, so werden auch die weiteren Zwischenverpackungen 110 in die Faltschachtel 105 eingeführt. Anschließend wird das fertig verpackte Wischerblatt 115 in einem Schritt 185 bereitgestellt.

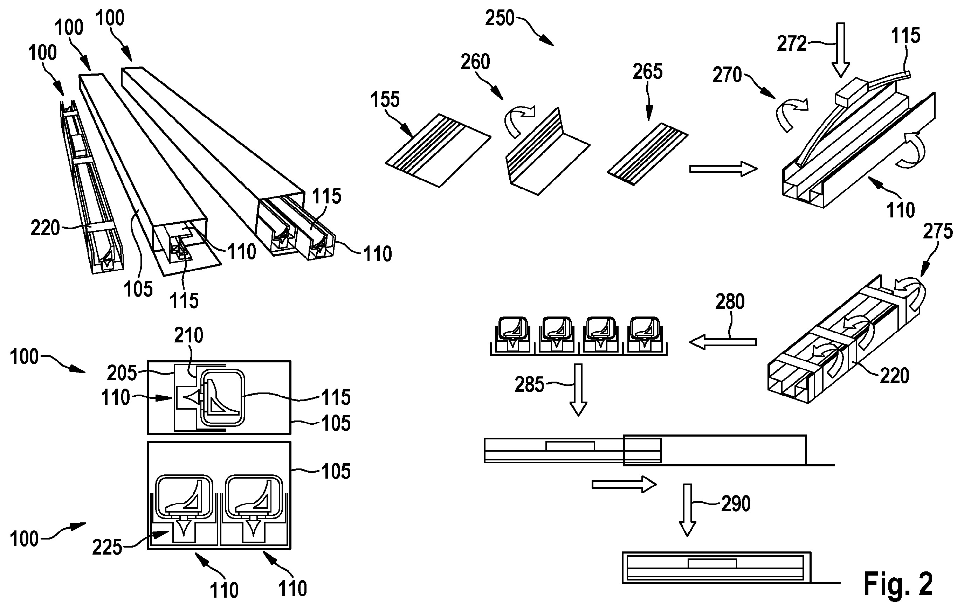

Figur 2 zeigt eine Verpackung 100 und ein Verfahren 250 zur Verpackung eines Wischerblatts 115 in der Verpackung 100 gemäß einer zweiten Ausführungsform. In der gezeigten Ausführungsform umfasst die Zwischenverpackung 110 ein erstes Element 205 und ein zweites Element 210. Das erste Element 205 weist einen U-förmigen Querschnitt auf, wobei bevorzugterweise nur zwei Falze in Längsrichtung verlaufen. Das zweite Element 210 weist einen Querschnitt auf, der abwechselnd vertikale und horizontale Abschnitte umfasst, die bezüglich eines Mittelabschnitts symmetrisch angeordnet sind. Der Mittelabschnitt liegt bevorzugterweise am Mittelabschnitt des ersten Elements 205 an. Die äußersten vertikalen Abschnitte des zweiten Elements 210 liegen bevorzugterweise an Innenseiten der Seitenabschnitte des ersten Elements 205 an.

In einer weiteren Ausführungsform können das erste Element 205 und das zweite Element 210 einstückig miteinander verbunden sein. Im dargestellten Querschnitt können sich die Enden des einstückigen Materials für die Zwischenverpackung 110 an einem Stoß 215 treffen. Der Stoß 215 ist bevorzugterweise in einem Bereich angeordnet, an dem ansonsten ein Falz oder Knick läge.

Das Verfahren 250 geht wieder von einem Plano 155 aus, welches in einem ersten Schritt 260 gefaltet und in einem nachfolgenden Schritt 265 teilweise geklebt wird. Diese Schritte können miteinander integriert ausgeführt sein. Anschließend liegt das gefaltete und teilweise geklebte Plano 155 noch in flacher Form vor.

In einem folgenden Schritt 270 wird die Zwischenverpackung 110 aufgeklappt, wodurch sich ein Vorsprung 225 ergibt. Danach wird das Wischerblatt 115 in einem Schritt 272 von oben in die Zwischenverpackung 110 eingelegt, so dass das Wischerblatt 115 vom Vorsprung 225 seitlich abgestützt ist.

In einem nachfolgenden Schritt 275 werden eine oder mehrere Banderolen 220 so an der Zwischenverpackung 110 angebracht, dass die Banderolen die Zwischenverpackung in Querrichtung umschließen. Die Banderolen 220 verhindern, dass das Wischerblatt 115 aus der Zwischenverpackung 110 fällt und gewährleisten eine stabile Form der Zwischenverpackung 110.

Die nachfolgenden Schritte 280, 285 und 290 entsprechen den Schritten 175, 180 und 185 aus Figur 1.

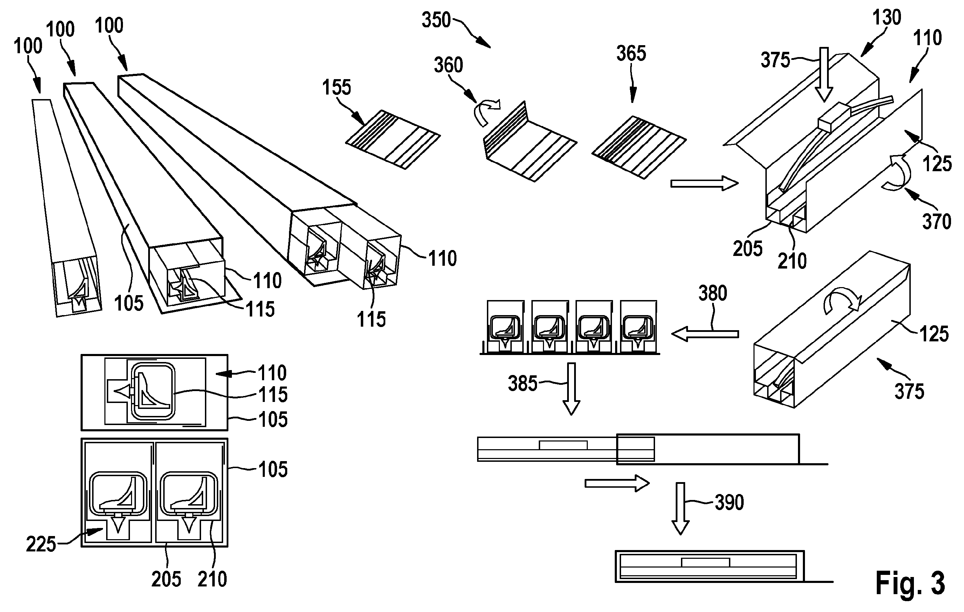

Figur 3 zeigt eine Verpackung 100 und ein Verfahren 350 zur Verpackung eines Wischerblatts 115 in der Verpackung 100 gemäß einer dritten Ausführungsform. Die dargestellte Ausführungsform unterscheidet sich von der in Figur 2 dargestellten Ausführungsform dadurch, dass zum Schließen der Zwischenverpackung 110 auf der Oberseite keine Banderolen 220 verwendet werden, sondern das erste Element 205 einen Deckelabschnitt 130 aufweist, mit dem die Oberseite der Zwischenverpackung 110 verschlossen werden kann. In einer bevorzugten Ausführungsform umfasst der Deckelabschnitt 130 eine Lasche zum Verkleben mit einem Seitenabschnitt 125 des ersten Elements 205.

Auch hier können das erste Element 205 und das zweite Element 210 einstückig miteinander ausgeführt sein. Enden des Materials der Zwischenverpackung 110 liegen dann jedoch üblicherweise nicht aneinander und bilden somit keinen Stoß 215.

Dementsprechend korrespondieren die Schritte 360 bis 390 des Verfahrens 350 zu den Schritten 260 bis 290 des Verfahrens 250 aus Figur 2, mit der Ausnahme des Schritts 375, in welchem keine Banderolen angebracht werden, sondern der Deckelabschnitt 130 des ersten Elements 205 über die obere Öffnung der Zwischenverpackung 110 geklappt wird. Bevorzugterweise umfasst der Deckelabschnitt 130 eine Lasche, die mit dem entsprechenden Seitenabschnitt 125 im gleichen Schritt auch verklebt werden kann.

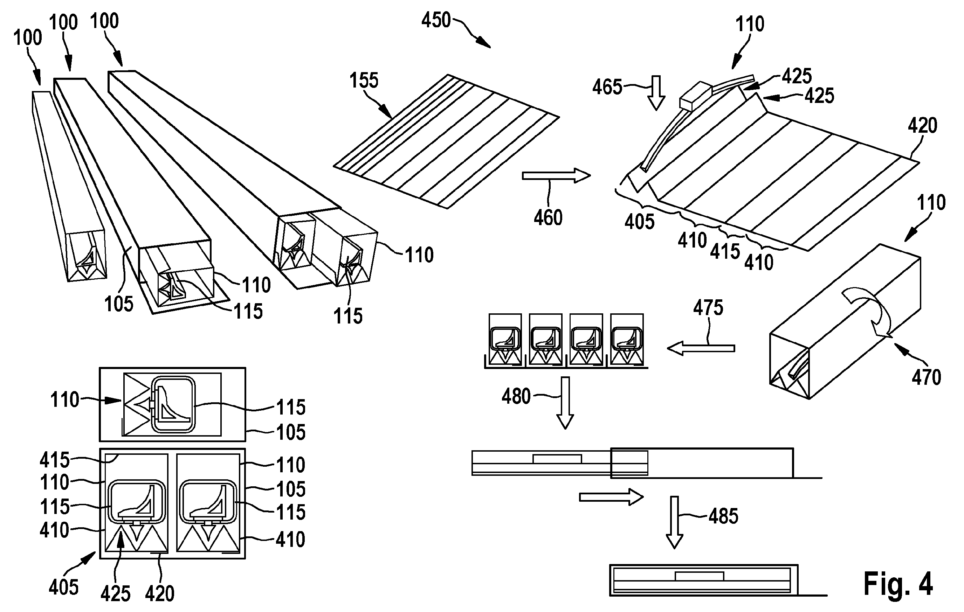

Figur 4 zeigt eine weitere Verpackung 100 und ein Verfahren 450 zum Verpacken eines Wischerblatts 115 in der Verpackung 100 nach einer vierten Ausführungsform.

Der Querschnitt der Zwischenverpackung 110 umfasst hier einen Bodenabschnitt 405, an den sich zwei Seitenabschnitte 410 anschließen, die ihrerseits mittels eines Deckelabschnitts 415 miteinander verbunden sind. Einer der Seitenabschnitte 410 umfasst bevorzugterweise eine Lasche 420 zum Verkleben der Zwischenverpackung 110.

Im Querschnitt der Zwischenverpackung 110 ist der Bodenabschnitt 405 M-förmig gefaltet, so dass sich zwei prismenförmige Vorsprünge 425 ergeben, zwischen denen die schmale Seite des Wischerblatts 115 liegen kann. Eine Seite des Bodenabschnitts 405 läuft in horizontaler Richtung zurück zum entgegengesetzten Ende und geht in einem 90°-Knick in einen ersten Seitenabschnitt 410 über. An einem weiteren Knick geht der Seitenabschnitt 410 in einen Deckelabschnitt 415 über, der seinerseits durch einen weiteren Knick zu einem Seitenabschnitt 410 wird. Daran schließt sich die Lasche 420 mit einem weiteren Knick an.

Das Verfahren 450 beginnt mit einem Schritt 460, in welchem der Bodenabschnitt 405 M-förmig gefaltet wird. Anschließend wird in einem Schritt 465 das Wischerblatt 110 von oben zwischen die beiden Vorsprünge 425 des Bodenabschnitts 405 eingesetzt.

In einem nachfolgenden Schritt 470 werden die restlichen Abschnitte des Plano 155 derart um das Wischerblatt 110 herum gefaltet, dass der Querschnitt geschlossen ist und die Lasche 420 am Bodenabschnitt 405 anliegt. Bevorzugterweise wird die Lasche 420 dabei am Bodenabschnitt 405 verklebt. Die Schritte 475, 480 und 485 entsprechen den Schritten 380 bis 390 des Verfahrens 350 in Figur 3.

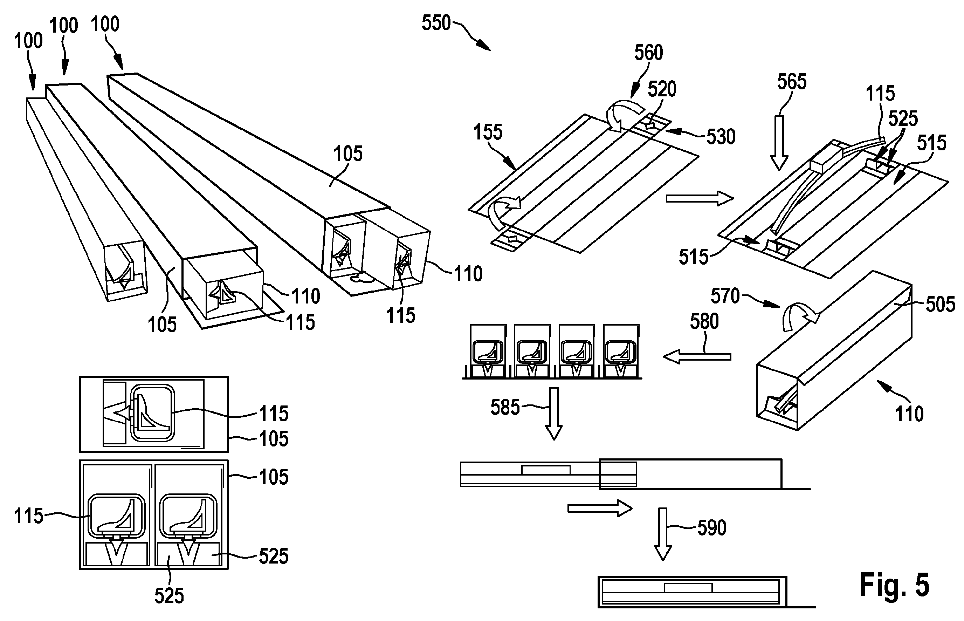

Figur 5 zeigt eine Verpackung 100 und ein Verfahren 550 zur Verpackung eines Wischerblatts 115 in der Verpackung 100 gemäß einer fünften Ausführungsform.

Charakteristisch an der vorliegenden Ausführungsform ist, dass das Material der Zwischenverpackung 110 im Querschnitt das Wischerblatt 115 einmal umläuft, wobei eine Lasche 505 zur Überlappung und optionalen Verklebung vorgesehen ist. Im Bereich der Enden des Wischerblatts 115 ist jeweils ein Abschnitt 510 des Plano 155 in Längsrichtung derart nach innen gefaltet, dass sich quer liegende, prismenförmige Auflagen 515 ergeben. In die Auflage 515 ist jeweils eine Kerbe 520 eingebracht, in der ein schmaler Abschnitt des Wischerblatts 115 aufgenommen werden kann. Durch die Kerbe 520 wird die Auflage 515 in zwei Stützelemente 525 unterteilt.

Im Verfahren 550 wird von einem Plano 155 ausgegangen, welches von der Rechteckform abweicht, indem zwei zunächst abstehende Abschnitte 530 vorgesehen sind, die in einem ersten Schritt 560 der Länge nach gefaltet werden, um die prismenförmigen Auflagen 515 zu bilden. Die Kerben 520 sind bevorzugterweise bereits vor dem Falten im Schritt 560 als Aussparung im Plano 155 eingebracht.

In einem Schritt 565 wird das Wischerblatt 515 von oben so in die Kerben 520 eingelegt, dass das Wischerblatt 115 an den Stützelementen 525 abgestützt ist. In einem nachfolgenden Schritt 570 werden verbleibende Abschnitte des Plano 155 in Längsrichtung um das Wischerblatt 115 gefaltet, so dass ein Querschnitt der Zwischenverpackung 110 geschlossen ist. Um diesen Faltvorgang zu ermöglichen, sind unterschiedliche Positionen der Abschnitte 530 am Plano 155 möglich.

Bevorzugterweise wird die Zwischenverpackung 110 gleichzeitig im Bereich der Lasche 505 verklebt. Die nachfolgenden Schritte 580, 585 und 590 entsprechen den Schritten 475, 480 und 485 des Verfahrens 450 aus Figur 4.

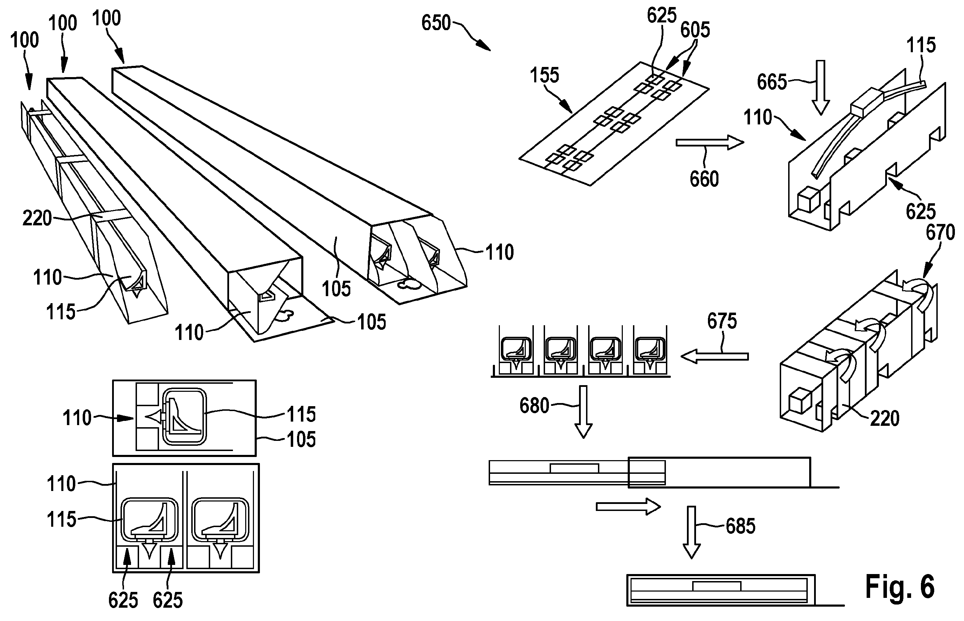

Figur 6 zeigt eine Verpackung 100 und ein Verfahren 650 zur Verpackung eines Wischerblatts 115 in der Verpackung 100 entsprechend einer sechsten Ausführungsform.

Die dargestellte Ausführungsform ähnelt der in Figur 2 gezeigten zweiten Ausführungsform, mit dem Unterschied, dass die Zwischenverpackung 110 einstückig und im Querschnitt auch einlagig ist. Die Zwischenverpackung 110 ist aus einem rechteckigen Plano 155 herstellbar. Die Zwischenverpackung 110 ist im Querschnitt U-förmig mit zwei in Längsrichtung verlaufenden Falzen 605. Im Bereich der Falze 605 sind Stützelemente 625 ausgebildet, die knieförmig aus dem Plano 155 in Richtung Innenseite der Zwischenverpackung 110 herausgefaltet sind. Die Stützelemente 625 sind dazu eingerichtet, das Wischerblatt 115 zu beiden Seiten eines schmalen Endes lateral abzustützen.

Das Verfahren 650 beginnt mit einem ersten Schritt 660, in dem das rechteckige Plano 155 in einem einzigen Arbeitsgang U-förmig gefaltet wird und die Stützelemente 625 herausgeformt werden. Anschließend wird in einem Schritt 665 das Wischerblatt 115 von oben in die U-förmige Zwischenverpackung 110 eingesetzt.

In einem nachfolgenden Schritt 670, der zum Schritt 276 des Verfahrens 250 aus Figur 2 korrespondiert, werden Banderolen 220 angebracht, und das Wischerblatt 215 in der Zwischenverpackung 110 zu stabilisieren. Die anschließenden Schritte 675, 680 und 685 entsprechen den Schritten 580, 585 und 590.

## Patentansprüche

1. Verpackung (100) für ein Wischerblatt (115), umfassend:
- eine quaderförmige Faltschachtel (105);
- eine Zwischenverpackung (110) zur Aufnahme des Wischerblatts (115) und um in der Faltschachtel (105) aufgenommen zu werden,
- wobei die Zwischenverpackung (110):
- aus einem ebenen Material (155) durch Falten herstellbar ist,
- zwei parallele Längsseiten (120, 130, 410) zur Anlage an Innenseiten der Faltschachtel (105) aufweist, und
- laterale Stützeinrichtungen (125, 225, 425, 525, 625) umfasst, um einem Kippen des Wischerblatts (115) in der Zwischenverpackung (110) entgegen zu wirken,
**dadurch gekennzeichnet, daß**
- die Zwischenverpackung (110) einen V-förmigen Querschnitt aufweist, oder
- die Zwischenverpackung (110) an einer Längsseite offen ist und eine den Querschnitt umschließende Banderole (220) umfasst, oder
- Verpackung (100) nach einem der vorangehenden Ansprüche, wobei die Zwischenverpackung (110) ein erstes Element (205) mit U-förmigem Querschnitt und ein zweites Element (210) umfasst, dessen Querschnitt abwechselnd vertikale und horizontale Abschnitte umfasst und das bezüglich eines mittleren Abschnitts, der zwischen den Schenkeln des ersten Elements (205) an diesem anliegt, symmetrisch ist, oder
- der Querschnitt der Zwischenverpackung (110) einen M-förmigen Bodenabschnitt (405) aufweist, oder
- die Zwischenverpackung (110) prismenförmige Auflagen (515) für die Enden des Wischerblatts (115) umfasst, wobei die Auflagen (515) jeweils eine V-förmige Kerbe (520) zur Anlage des Wischerblatts (115) aufweisen, oder
- die Zwischenverpackung (110) in Längsrichtung mit zwei Falzen (605) U-förmig gefaltet ist und im Bereich der Falze (605) jeweils winklige Stützelemente (625) in Richtung Innenseite gefaltet sind.

2. Verpackung (100) nach Anspruch 1, wobei die Zwischenverpackung (110) dazu eingerichtet ist, das Wischerblatt (115) an einer Längsseite (130) aufzunehmen.

3. Verpackung (100) nach einem der vorangehenden Ansprüche, wobei die Faltschachtel dazu eingerichtet ist, die Zwischenverpackung (110) mit dem Wischerblatt (115) von einer Stirnseite aufzunehmen.

4. Verpackung (100) nach einem der vorangehenden Ansprüche, wobei die Faltschachtel (105) dazu eingerichtet ist, zwei Zwischenverpackungen (110) aufzunehmen.

## Claims

1. Packaging (100) for a wiper blade (115), comprising:
- a cuboidal folded box (105);
- an intermediate packaging (110) for receiving the wiper blade (115) and in order to be received in the folded box (105),
- wherein the intermediate packaging (110):
- can be produced from a flat material (155) by folding,
- has two parallel longitudinal sides (120, 130, 410) for bearing against inner sides of the folded box (105), and
- comprises lateral supporting devices (125, 225, 425, 525, 625) in order to oppose tilting of the wiper blade (115) in the intermediate packaging (110),
**characterized in that**
- the intermediate packaging (110) has a V-shaped cross section, or
- the intermediate packaging (110) is open on one longitudinal side and comprises a revenue seal (220) surrounding the cross section, or
- packaging (100) according to one of the preceding claims, wherein the intermediate packaging (110) comprises a first element (205) with a U-shaped cross section and a second element (210), the cross section of which comprises alternating vertical and horizontal portions and which is symmetrical with respect to a central portion which bears against the first element (205) between the limbs thereof, or
- the cross section of the intermediate packaging (110) has an M-shaped base portion (405), or
- the intermediate packaging (110) comprises prism-shaped supports (515) for the ends of the wiper blade (115), wherein the supports (515) each have a V-shaped notch (520) for the wiper blade (115) to bear against, or
- the intermediate packaging (110) is folded in a U-shaped manner in the longitudinal direction with two folds (605) and, in the region of the folds (605), angular supporting elements (625) are in each case folded in the direction of the inner side.

2. Packaging (100) according to Claim 1, wherein the intermediate packaging (110) is configured to receive the wiper blade (115) on one longitudinal side (130).

3. Packaging (100) according to either of the preceding claims, wherein the folded box is configured to receive the intermediate packaging (110) with the wiper blade (115) from an end side.

4. Packaging (100) according to one of the preceding claims, wherein the folded box (105) is configured to receive two intermediate packagings (110).

## Revendications

1. Emballage (100) pour un balai d'essuie-glace (115), comprenant :
- une boîte pliante (105) en forme de parallélépipède rectangle ;
- un emballage intermédiaire (110) pour loger le balai d'essuie-glace (115) et à loger dans la boîte pliante (105) ;
- l'emballage intermédiaire (110) :
- pouvant être réalisé par pliage à partir d'une matière plane (155) ;
- comportant deux côtés longitudinaux (120, 130, 410) parallèles pour une installation au niveau des côtés intérieurs de la boîte pliante (105) ; et
- comprenant des dispositifs de maintien (125, 225, 425, 525, 625) latéraux pour contrecarrer un basculement du balai d'essuie-glace (115) dans l'emballage intermédiaire (110) ;
caractérisé en ce qui :
- l'emballage intermédiaire (110) comporte une section transversale en forme de V ; ou
- l'emballage intermédiaire (110) est ouvert au niveau d'un côté longitudinal et comprenant une banderole (220) entourant la section transversale ; ou
- emballage (100) selon l'une quelconque des revendications précédentes, l'emballage intermédiaire (110) comprenant un premier élément (205) avec une section transversale en forme de U et un deuxième élément (210) dont la section transversale comprend une alternance de sections verticales et horizontales et symétrique par rapport à une section centrale reposant contre le premier élément (205) entre les montants dudit élément ; ou
- la section transversale de l'emballage intermédiaire (110) comporte une section de fond (405) en forme de M ; ou
- l'emballage intermédiaire (110) comprend des portants (515) en forme de prisme pour les extrémités du balai d'essuie-glace (115), les portants (515) comportant respectivement une encoche (520) en forme de V pour installer le balai d'essuie-glace (115) ; ou
- l'emballage intermédiaire (110) est plié dans la direction longitudinale avec deux plis (605) en forme de U et des éléments de maintien (625) en angle sont respectivement pliés en direction du côté intérieur dans la région des plis (605).

2. Emballage (100) selon la revendication 1, l'emballage intermédiaire (110) étant conçu pour recevoir le balai d'essuie-glace (115) au niveau d'un côté longitudinal (130).

3. Emballage (100) selon l'une quelconque des revendications précédentes, la boîte pliante étant conçue pour loger l'emballage intermédiaire (110) avec le balai d'essuie-glace (115) partant d'un côté avant.

4. Emballage (100) selon l'une quelconque des revendications précédentes, la boîte pliante (105) étant conçue pour loger deux emballages intermédiaires (110) .
